# EUROPÄISCHE PATENTSCHRIFT

(11) **EP 4 212 656 B1**
(45) Veröffentlichungstag und Bekanntmachung des Hinweises auf die Patenterteilung: **25.03.2026**
(21) Anmeldenummer: 22213399.3
(22) Anmeldetag: 14.12.2022
(51) Int. Cl.: D01G 19/26, G05B 19/00

(54) **VERFAHREN ZUM BETRIEB EINER KÄMMMASCHINE UND EINE KÄMMMASCHINE**
METHOD FOR OPERATING A COMBING MACHINE AND A COMBING MACHINE
PROCÉDÉ DE FONCTIONNEMENT D'UNE PEIGNEUSE ET UNE PEIGNEUSE

(30) Priorität: 18.01.2022 DE 102022101037
(43) Veröffentlichungstag der Anmeldung: 19.07.2023
(73) Patentinhaber: Trützschler Group SE, 41199 Mönchengladbach (DE)
(72) Erfinder: Saeger, Nicole, 50259 Pulheim (DE); Friedrich, Roland, 41366 Schwalmtal (DE); Balven, Thomas, 41363 Juechen (DE)

(56) Entgegenhaltungen:
- EP-A1- 0 410 429
- EP-A1- 2 444 534
- DE-B4- 102006 002 390

## Beschreibung

Die Erfindung betrifft ein Verfahren zum Betrieb einer Kämmmaschine für die Spinnereivorbereitung, aufweisend wenigstens einen Kämmkopf mit einer rotierend angetriebenen Rundkammwalze, über die in periodischer Abfolge ein Faserstrang zum Auskämmen desselben geführt wird, mit einer Oberzange und mit einer Unterzange, zwischen denen der auszukämmende Faserstrang in periodischer Abfolge festgeklemmt und wieder freigegeben wird, und mit einer rotierend angetriebenen vorderen Abreißwalze und einer rotierend angetriebenen hinteren Abreißwalze, wobei mit der vorderen Abreißwalze der Faserstrang in periodischer Abfolge getrennt wird, indem die Ober- und Unterzange relativ zu den Abtreißwalzen vor- und zurück bewegt werden und die Abtreißwalzen eine Pilgerschrittbewegung ausführen, wobei die Rotationsbewegungen der Abtreißwalzen mittels einer Steuereinheit zueinander synchronisiert gesteuert werden.

Beim klassischen Kämmverfahren, z.B. nach Heilmann, wird Faserwatte in Form eines Faserstranges von einem Wattewickel abgezogen und mittels einer Speisewalze einem Zangenapparat zugeführt. In einer zurückgezogenen Stellung der Zangen des Zangenapparates sind diese geschlossen und halten einen aus den Zangen herausragenden vorderen Endabschnitt des Faserstranges in Form eines Faserbartes fest. Der aus den Zangen herausragende Faserbart wird von dem unterhalb der Zangen angeordneten Rundkamm ausgekämmt. Danach wird die Zange in eine vordere, geöffnete Stellung bewegt, wobei die Abreißwalzen einen zuvor ausgekämmten Faserbart mit seinem hinteren Endabschnitt durch eine Rückwärtsdrehung in Richtung des vorderen Endabschnittes der mittels der Zangen geklemmten Faserwatte fördern. Der vom Rundkamm ausgekämmte Faserbart legt sich auf diesen hinteren Endabschnitt und wird mit diesem zusammen in die Klemmstelle der Abreißwalzen gezogen, da die Abreißwalzen wieder die Drehrichtung ändern. Bei dieser Drehung, bei der der Drehwinkel etwa doppelt so groß ist wie die vorhergehende rückwärtige Drehung, wird der Faserbart von der im Zangenaggregat liegenden Faserwatte abgerissen. Dabei wird das hintere Ende des abgerissenen Faserbartes durch einen Fixkamm gezogen du ausgekämmt.

Die Abreißwalzen führen dabei eine Pilgerschrittbewegung aus, wobei sie bei einer Rückdrehung ein Endstück des beim vorherigen Kammspiel abgezogenen Faserbartes zurückführen. Auf dieses Endstück wird das Anfangsstück des Faserbartes gelegt und durch den Druck der beiden Abreißwalzen nach einer Drehrichtungsumkehr mit dem vorgelaufenen bereits ausgekämmten Faserbart verlötet. Die Abreißwalzen müssen bei jedem Kammspiel nicht nur ihre Bewegungsrichtung zweimal ändern, sondern diese müssen auch beim Rücklauf eine geringere Gesamtumdrehung ausführen als beim Vorlauf.

Für diese Bewegung der Abreißwalzen können eine Kurvenscheibe, eine Nockenscheibe oder eine Kurvennut verwendet werden, die fest über ein Getriebe mit der Zangenbewegung gekoppelt sind. Diese hin- und hergehende Pilgerschrittbewegung der Abreißwalzen ist bei einer getriebetechnischen Kopplung der nebeneinander liegenden Kämmköpfe bei Kammspielzahlen von über 400 oder sogar von über 500 pro Minute hoch belastend für die Wellen, und diese führt zu großen Schwingungen an der Kämmmaschine und benötigt viel Energie. Die Antriebsmotoren der Abreißwalzen müssen sehr leistungsfähig sein und benötigen ebenfalls leistungsstarte Servo-Umrichter zur Speisung der Motoren. Durch die permanente Beschleunigung und Verzögerung fällt eine hohe Verlustleistung an, die sich im Energieverbrauch der Kämmmaschine niederschlägt und bei Kammspielen von über 600 pro Minute mitunter eine Wasserkühlung der Elektromotoren erforderlich macht. Damit werden die Motoren mit Kühleinrichtung sehr teuer.

Die Abreißwalzen können auch direkt elektromotorisch angetrieben werden, wie die EP 0 374 723 B1 lehrt. Dabei ist es darüber hinausgehend auch möglich, dass die Walzen selbst den Rotor eines länglich und als Außenläufer ausgebildeten Elektromotors bilden, sodass die Abreißwalzen getriebelos angetrieben werden bzw. sich selbst antreiben.

Aus der EP 2 444 534 B1 ist ein Verfahren zum Betrieb einer Kämmmaschine für die Spinnereivorbereitung bekannt, und es wird vorgeschlagen, auf möglichst einfache Weise durch die Angabe von diskreten Setzpunkten eine Bewegungskurve der Abreißwalzen über der Zeit einzurichten, indem eine Steuerung mit einer Recheneinheit und mit einer Eingabeeinheit Verwendung findet. Nach der Eingabe diskreter Umkehrpunkte und dazwischenliegenden Hilfspunkten kann die Pilgerschrittbewegung entsprechend ausgeführt werden, indem die Servomotoren gemäß dem Erfordernis des Kurvenverlaufs angesteuert werden.

Die Abreißwalzen werden jedoch unverändert mit hohen Beschleunigungen angetrieben und verzögert, sodass sich auch unter Zuhilfenahme der beschriebenen Programmierung von Hilfspunkten in der Pilgerschrittbewegung im Betrieb der Kämmmaschine unverändert ein hoher Energiebedarf ergibt.

Die Bewegung im Zangenapparat ist ebenfalls mehrdimensional, allerdings fallen nicht so große Beschleunigungen an. Jedoch muss die oszillierende Bewegung der Unterzange und die öffnende und schließende Bewegung der Oberzange synchronisiert mit der Pilgerschrittbewegung der Abreißwalzen ablaufen, sodass auch diese Bewegung komplex ist und nicht alle Bewegungskomponenten können mit separat zugeordneten Elektromotoren angesteuert werden. Zudem kontrollieren die meisten bekannten Kämmmaschinen den Kämmlingsanteil durch die Möglichkeit zur Veränderung der maschinenseitig bestimmten Größe des sogenannten Ecartements, das im Wesentlichen dadurch verändert wird, dass der äußere Umkehrpunkt der Bewegung des Zangenapparates verstellt wird, was ebenfalls eine für den Kämmprozess technologische Größe darstellt.

Aus der EP 0 410 429 A1 ist ein Verfahren bekannt, bei dem Qualitätsmerkmale an allen kritischen Bereichen einer Spinnereilinie gemessen werden sollen. Es soll sich dadurch die Möglichkeit bieten, die Produktionsgeschwindigkeit auf einem erwunschten Maximum zu halten, aber dennoch die Qualitätsmerkmale einzuhalten und zwar durch gezielte Änderungen in anderen Bereichen des Herstellungsverfahrens, solange die vorgenommenen Änderungen nicht zu unzulässigen Abweichungen bei anderen Qualitätsmerkmalen bzw. bei der Produktionsgeschwindigkeit führen. Insofern soll jede Änderung, die über die interne Regelung einer Einzelmaschine hinausgeht, zuerst durch das Computersystem der Bedienungsperson vorgeschlagen werden, die dann unter Benutzung ihrer eigenen Erfahrung und ihres Urteilsvermögens eine Auswahl treffen kann, ob sie den Vorschlag annimmt oder nicht.

Aufgabe der Erfindung ist die weitere Verbesserung des Betriebs einer Kämmmaschine, um insbesondere für einen Bediener eine erhöhte Flexibilität zum Betrieb der Kämmmaschine zu bieten. Dabei sollte die Betriebsart der Kämmmaschine möglichst flexibel an die Anforderungen des entstehenden, ausgekämmten Faserstranges anpassbar sein.

Diese Aufgabe wird ausgehend von einem Verfahren gemäß dem Oberbegriff des Anspruches 1 mit Bezug auf das Verfahren in Verbindung mit den kennzeichnenden Merkmalen und ausgehend von Anspruch 14 mit Bezug auf die Kämmmaschine selbst gelöst. Vorteilhafte Weiterbildungen der Erfindung sind in den abhängigen Ansprüchen angegeben.

Die Erfindung schließt die technische Lehre ein, dass die Steuereinheit wenigstens die vordere Abreißwalze und/oder die hintere Abreißwalze in Abhängigkeit von durch einen Bediener vorwählbaren Programmen ansteuert, wobei die vorwählbaren Programme wenigstens ein erstes Programm umfassen, gemäß dem eine maximale Ausbringungsmenge an ausgekämmtem Faserstrang erzeugt wird und/oder ein zweites Programm umfassen, gemäß dem eine maximale Qualität des ausgekämmten Faserstrangs erzeugt wird und/oder ein drittes Programm umfassen, gemäß dem eine minimale Energie pro Menge an ausgekämmtem Faserstrang benötigt wird.

Kerngedanke der Erfindung ist ein Verfahren zur Auswahl der Betriebsart der Kämmmaschine, sodass ein Bediener ein Programm zum Betrieb der Kämmmaschine vorwählen kann und sodass die Steuereinheit der Kämmmaschine dazu ausgebildet ist, abhängig vom gewählten Programm bestimmte Parametersätze zur Ansteuerung des Kämmkopfes auszuwählen und für den Betrieb der Kämmmaschine anzuwenden. Erfindungsgemäß kann beispielsweise ein erstes Programm gewählt werden, bei dem eine maximale Ausbringungsmenge an ausgekämmtem Faserstrang im Vordergrund steht, sodass die Qualität des Faserstrangs und/oder der notwendige Energieeinsatz zur Erzeugung des ausgekämmten Faserstrangs erst nachrangig betrachtet werden. Alternativ ist es möglich, ein zweites Programm zu wählen, gemäß dem beispielsweise eine maximale Qualität des ausgekämmten Faserstrangs erzeugt wird, sodass die Ausbringungsmenge pro Zeit ebenso wie beispielsweise auch die Energie zum Bereitstellen des ausgekämmten Faserstrangs der maximalen Qualität nachrangig betrachtet werden. So ist es gemäß einem dritten Programm auch möglich, dass der Betrieb der Kämmmaschine unter dem Aspekt der minimalen notwendigen Energie pro Menge an ausgekämmtem Faserstrang eingerichtet wird, sodass sowohl die Ausbringungsmenge als auch die Qualität nachrangig betrachtet werden. Im Sinne der vorliegenden Erfindung können dabei auch Programme miteinander kombiniert werden, beispielsweise kann die Qualität des ausgekämmten Faserstrangs maximiert werden, während dabei gleichzeitig auch der Energieeinsatz minimiert wird, was beispielsweise auf Kosten der maximalen Ausbringungsmenge möglich sein kann. Dabei ist es beispielsweise auch möglich, die Ausbringungsmenge zu maximieren, und zugleich den Energieeinsatz zu minimieren, der pro Menge an ausgekämmten Faserstrang notwendig ist. Beispielsweise kann der Prozess des eigentlichen Auskämmens des Faserbartes verkürzt werden, oder das Ecartement wird vergrößert oder verkleinert, sodass der eigentliche Kämmzyklus verkürzt wird oder weniger Kämmzyklen pro ausgebrachter Menge an ausgekämmtem Faserstrang notwendig sind.

Zusätzlich kann es möglich sein, die Bewegungen der Ober- und Unterzange an die Bewegung der vorderen Abreißwalze anzusteuern. Damit kann das Ecartement bzw. der Schließzeitpunkt der Zangen an die Rotationsbewegung der vorderen Abreißwalze angepasst werden.

Erfindungsgemäß ist insofern die Vorwahl mehrerer Programme möglich, wobei nicht lediglich drei Programme von einem Bediener vorgewählt werden können, sodass die Steuereinheit den einem vorgewählten Programm zugeordneten Steuerparametersatz aktiviert. So ist es beispielsweise möglich, dass die vorwählbaren Programme wenigstens ein viertes Programm umfassen, gemäß dem ein reduzierter bzw. ein minimaler Kämmlingsprozentsatz erzeugt wird, der bestimmt ist durch den Kämmlingsanteil des ausgekämmten Faserstranges. So kann es beispielsweise für einen Kunden von Bedeutung sein, abhängig von der mit dem Faserstrang geplanten textilen Ware nur einen geringen Kämmlingsanteil dem Faserstrang zu entnehmen, sodass auch ein solches Programm durch einen Bediener in der Steuereinheit vorwählbar ist. Auch dieses beispielhaft aufgezeigte vierte Programm kann kombiniert ausgewählt werden mit einem der vorstehend genannten Programme.

Beispielsweise weist die Steuereinheit eine Eingabe-Ausgabeeinheit auf, insbesondere einen berührungssensitiven Bildschirm, wobei durch die Steuereinheit eine Kammspielzahl abgefragt wird, die der Bediener mittels der Eingabe-Ausgabeeinheit eingeben und an die Steuereinheit mitteilen kann. Die Steuereinheit ist dabei vorteilhafterweise jene Steuereinheit, mit der sämtliche Funktionen der Kämmmaschine einem Bediener angezeigt werden und über die Eingabe-Ausgabeeinheit kann der Bediener auch sämtliche Funktionen der Kämmmaschine steuern. Somit ist die Steuereinheit zur erfindungsgemäßen Ausführung der Programmvorwahl und zur Ausführung der Programme keine separate Steuereinheit, sondern betrifft die Steuereinheit, die auch zur Steuerung der Kämmmaschine in an sich bekannter Weise verfügbar ist. Jedoch kann diese Steuereinheit ein zusätzliches Steuermodul aufweisen oder zumindest ein Programmprodukt beinhalten, mit dem das erfindungsgemäße Verfahren ausgeführt werden kann.

Gemäß einem noch weiteren Vorteil ist eine Speichereinheit eingerichtet und mit der Steuereinheit verbunden oder baueinheitlich mit dieser ausgebildet, wobei Steuerparametersätze zur Steuerung der Funktionen des Kämmkopfes in der Speichereinheit abgelegt und von der Steuereinheit in Abhängigkeit des gewählten Programmes abgerufen werden. Die Speichereinheit kann insofern auch Bestandteil der Steuereinheit sein, und die Speichereinheit kann als flüchtiger oder nicht flüchtiger Speicher ausgebildet sein. Auf der Ausgabeeinheit der Steuereinheit können die möglichen vorwählbaren Programme einem Bediener angezeigt werden, sodass dieser auf Kundenwunsch in einfacher Weise das Programm vorwählen kann, um die mit der Kämmmaschine erzeugbare Qualität und/oder die Ausbringung des Faserstranges nach Kundenspezifikation einzustellen.

Die Kämmmaschine weist in an sich bekannter Weise einen Antriebsmotor auf, wobei gemäß einer noch weiteren Variante der Erfindung eine Motorleistungsaufnahmemesseinheit und/oder Motortemperaturmesseinheit in Verbindung mit dem Antriebsmotor eingerichtet sind, die an die Steuereinheit eine Motorleistungsaufnahme und/oder eine Motortemperatur übermitteln können. Damit ist es in Abhängigkeit des vorgewählten Programmes auch möglich, dass der Steuerparametersatz in Abhängigkeit der Messgrößen der Motorleistungsaufnahme bzw. der Motortemperatur über der Dauer des Betriebes des vorgewählten Programmes angepasst wird. Beispielsweise kann die Anpassung so erfolgen, dass eine vorgegebene maximale Leistungsaufnahme, insbesondere gemessen am Aufnahmestrom des Motors oder eine Motortemperatur mit einem Maximalwert vorgegeben werden, und die maximale Ausbringungsmenge des ausgekämmten Faserstrangs gemäß dem ersten Programm kann so parametriert werden, dass die maximale Leistung bzw. die maximale Temperatur gerade eben nicht erreicht bzw. überschritten werden. Auch ist es mit dem erfindungsgemäßen Verfahren möglich, unter Vorprogrammierung einer Mindest-Ausbringungsmenge die Energieaufnahme damit zu minimieren, dass der Motoraufnahmestrom gemessen wird, sodass die Verstellparameter, beispielsweise die Kammspielzahl oder die Beschleunigungen in der Drehbewegung der Abreißwalzen so angepasst werden, dass mit einer Messung des Motorstroms ein entsprechendes Minimum erkannt und eingestellt wird.

Insbesondere kann vorgesehen sein, dass die Steuereinheit die Drehungen der Abreißwalzen in Abhängigkeit des gewählten Programmes so ansteuert, dass die hintere Abreißwalze mit einer Phasenlage der Phasenlage der vorderen Abreißwalze vor- oder nachläuft und/oder wobei die Phasenlage beider Abreißwalzen im Bereich eines oberen Umkehrpunktes und/oder eines unteren Umkehrpunktes zueinander gleich sind. Je größer der Nachlauf der hinteren Abreißwalze in Bezug auf die Phasenlage der vorderen Abreißwalze ist, desto geringer ist die Energieaufnahme des Abreißwalzenpaares. Allerdings sollte dabei eine Schlaufenbildung im Faserstrang zwischen den Abreißwalzen berücksichtigt werden, die einen Maximalwert nicht übersteigen darf. Eine solche Schlaufe kann zwischen den Abreißwalzenpaaren entstehen, wenn die Drehzahldifferenz der Abreißwalzen größer wird, sodass beispielsweise die vorderen Abreißwalzen eine größere Länge an dem ausgekämmten Faserstrang in den Bereich zwischen den Abreißwalzen transportieren als die hinteren Abreißwalzen an Menge des Faserstranges abtransportieren.

Auch ist es vorteilhaft möglich, dass bei höherem sensierten Motorstrom und/oder bei einer höheren sensierten Motortemperatur die Abweichung zwischen der Fasenlage der vorderen Abreißwalze und der Phasenlage der hinteren Abreißwalze vergrößert wird und/oder die Kammspielzahl beispielsweise verringert wird.

Dabei kann die Bewegung der vorderen Abreißwalze und/oder die Bewegung der hinteren Abreißwalze einer sich ändernden Kammspielzahl angepasst werden. Eine solche Anpassung ist insbesondere von Vorteil, wenn die Kämmmaschine aus dem Stillstand angefahren wird und die Kammspielzahl auf eine voreingestellte Kammspielzahl hochgefahren wird oder wenn die Kämmmaschine vorübergehend heruntergefahren wird. Dabei ist nach jeder Prozessunterbrechung die Kämmmaschine üblicherweise mit einer entsprechenden Hochfahrrampe in Betrieb zu nehmen. Prozessunterbrechungen liegen zum einen bei einem Kannenwechsel vor, zum anderen resultieren diese aus immer wieder vorkommenden Prozessstörungen. Bei einem Kannenwechsel wird dabei zusätzlich eine Runterfahrrampe durchlaufen, wohingegen bei Prozessstörungen die Maschine unmittelbar stillgesetzt wird. Während dieser Hoch- und Runterfahrrampen werden ständig wechselnde Kammspielzahlen durchlaufen, insofern also steigende oder abnehmende Kammspielzahlen. Die während dieser Hoch- und Runterfahrphasen der Kämmmaschine produzierten Faserstränge weisen üblicherweise eine schlechtere Bandgleichmäßigkeit auf, sodass eine Anpassung der Bewegungen der vorderen und hinteren Abreißwalzen bei sich ändernden Kammspielzahlen insbesondere während der Hoch- und Runterfahrphasen sodann immer noch eine hohe Qualität des Faserstrangs ermöglicht.

Mit noch weiterem Vorteil ist eine Kontrolleinrichtung vorgesehen, mit der die Qualität des ausgekämmten Faserstranges erfassbar ist, wobei die Steuereinheit, insbesondere basierend auf dem vorgewählten Programm die Steuerparametersätze zur Steuerung der Funktionen des Kämmkopfes auswählt und/oder anpasst. Derartige Steuerparametersätze sind beispielsweise die Phasenlagen der vorderen und hinteren Abreißwalze, die Vor- und Zurückbewegung des Zangenapparates, die Öffnungs- und Schließbewegung der Oberzange gegenüber der Unterzange, die Drehzahl und Phasenlage der Rundkammwalze und/oder der Putzwalze, gegebenenfalls auch die automatische Einstellung des Ecartements, oder es kann beispielsweise auch die Kammspielzahl der Qualität des Faserstrangs angepasst werden, die mit der Kontrolleinrichtung sensiert wird.

Insbesondere kann auf die Pilgerschrittbewegung der Abreißwalzen Einfluss genommen werden. Beispielsweise kann vorgesehen sein, dass die hintere Abreißwalze mit einer maximalen Rotationsbeschleunigung zwischen den aufeinanderfolgenden unteren Umkehrpunkten betrieben wird, die kleiner ist als die maximale Rotationsbeschleunigung der vorderen Abreißwalze zwischen den aufeinanderfolgenden Unterpunkten, insbesondere wenn das dritte Programm gewählt wird, gemäß dem ein minimaler Energieeinsatz pro Menge an ausgekämmten Faserstrang erreicht werden soll.

Dafür können die vordere Abreißwalze und die hintere Abreißwalze mit einem jeweils den Abreißwalzen zugeordneten motorischen Antrieb separat angetrieben werden, wobei die Phasenlage und damit auch die Drehzahl der Abreißwalzen programmabhängig von der Steuereinheit über die jeweiligen motorischen Antriebe gesteuert werden. Auch die Größe der Schlaufe zwischen den Abreißwalzen kann sensorisch erfasst werden, um insofern auch wieder als Messgröße und damit als Eingangsgröße an die Steuereinheit bereitgestellt zu werden.

Die Erfindung richtet sich schließlich auch auf eine Kämmmaschine für die Spinnereivorbereitung mit einer Steuereinheit, mit der die Kämmmaschine betreibbar ist und wobei mit der Steuereinheit das vorstehend beschriebene Verfahren ausgeführt werden kann. Insbesondere weist die Kämmmaschine eine Speichereinheit auf, die mit der Steuereinheit verbunden oder baueinheitlich mit dieser ausgebildet ist, wobei Steuerparametersätze zur Steuerung der Funktionen des Kämmkopfes in der Speichereinheit ablegbar und von der Steuereinheit in Abhängigkeit des gewählten Programmes abrufbar sind.

Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigen:
- Fig. 1:: eine schematische Ansicht des Kämmkopfes mit einer Steuereinheit;
- Fig. 2:: der Phasenverlauf der Abreißwalzen in Darstellung der Phasenlage über dem Rotationswinkel und
- Fig. 3:: die Steuereinheit mit den Umgebungskomponenten, mit denen die Steuereinheit erfindungsgemäß kommunizieren kann.

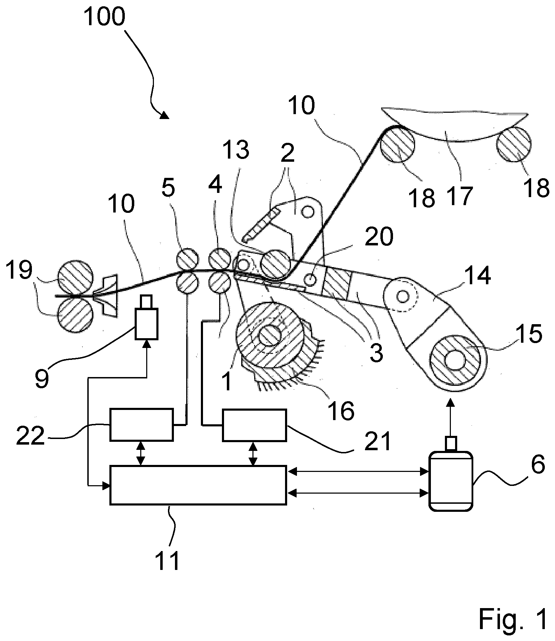

Figur 1 zeigt in schematischer Weise den Kämmkopf 100, dem der Faserstrang 10 von einem Faserwickel 17 zugeführt wird, in dem die Wickelwalzen 18 in Rotation versetzt werden. Der Faserstrang 10 gelangt an einen Speisezylinder 13 und wird schließlich dem vorderen Bereich zwischen der Oberzange 2 und der Unterzange 3 zugeführt. Der insbesondere mit der Oberzange 2 und der Unterzange 3 gebildete Zangenapparat kann oszillierend hin- und hergefahren werden, sodass sich der vordere Bereich, insbesondere die Spitze der Unterzange 3 der vorderen Abreißwalze 4 annähert und in der Umkehrbewegung den Abstand zur vorderen Abreißwalze 4 wieder vergrößert. Der vorderen Abreißwalze 4 ist eine hintere Abreißwalze 5 nachgelagert, wobei nach Durchlauf der Abreißwalzen 4 und 5 der Faserstrang 10 schließlich einem Abzugwalzenpaar 19 zugeführt wird.

Die Oszillationsbewegung des Zangenapparates wird erzeugt durch den Antriebsmotor 6, der durch seinen Betrieb in nicht näher gezeigter Weise die Zangenwelle 15 in eine Oszillationsbewegung versetzt. Die Unterzange 3 ist mit dem Zangenarm 14 auf der Zangenwelle 15 verbunden und damit oszillierend angelenkt, während die Oberzange 2 in einem Anlenkpunkt 20 an der Unterzange 3 angelenkt ist.

Vergrößert sich der Abstand der Unterzange 3 von der vorderen Abreißwalze 4, und klemmt die Oberzange 2 den Faserstrang 10 gegen die Unterzange 3 ein, so reißt der Faserstrang 10 ab, und der verbleibende aus der Klemmlinie der Oberzange 2 und der Unterzange 3 herausragende Faserbart kann mittels des Rundkammsegmentes 16 auf der Rundkammwalze 1 ausgekämmt werden.

Dabei führen die Abreißwalzen 4 und 5 eine Pilgerschrittbewegung aus, wobei die Bewegung in Transportrichtung zum Abzugswalzenpaar 19 hin etwa doppelt so groß ist wie die Bewegung des Faserstrangs 10 zurück zum Zangenapparat.

Als zentrales Element ist die Steuereinheit 11 dargestellt. Die vordere Abreißwalze 4 und die hintere Abreißwalze 5 weisen jeweils einen eigenen motorischen Antrieb 21 und 22 auf, die mittels der zentralen Steuerung 11 angesteuert werden. Ebenfalls wird der Antriebsmotor 6 des Kämmkopfes 100 von der Steuereinheit 11 angesteuert.

Die Darstellung zeigt weiterhin eine Kontrolleinrichtung 9, mit der die Qualität des Faserstrangs 10, insbesondere optisch oder taktil, erfasst werden kann. Die Kontrolleinrichtung 9 steht dabei ebenfalls mit der Steuereinheit 11 in einer Signalverbindung.

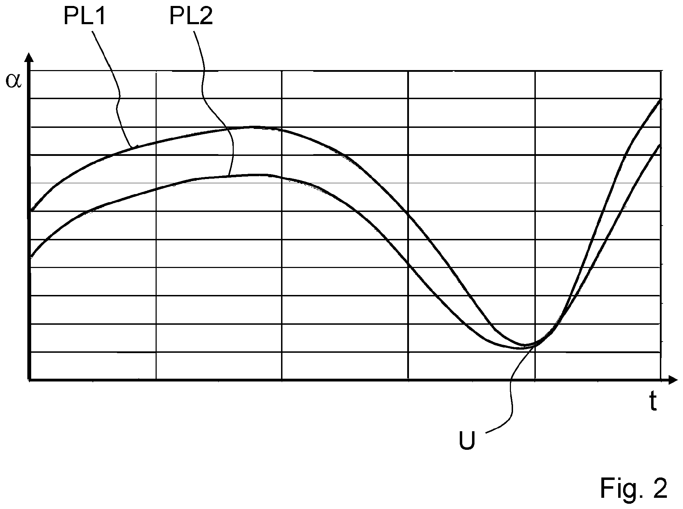

Figur 2 zeigt ein Diagramm, auf dem der Rotationswinkel der Abreißwalzen 4 und 5 in Form von Phasenlagen PL1 und PL2 der vorderen Abreißwalze 4 und der hinteren Abreißwalze 5 aufgetragen ist. Die Phasenlagen PL1 und PL2 zeigen einen typischen Verlauf eines Phasenumlaufes einer Pilgerschrittbewegung, sodass nach dem Phasenumlauf der Rotationswinkel leicht ansteigt. Die Phasenlagen PL1 und PL2 zeigen den Verlauf eines einzigen Kämmzyklus in der Pilgerschrittbewegung, wobei die Aufeinanderfolge von Kämmzyklen eine kontinuierliche Vordrehung der Rotationswinkel α bewirken, sodass der Kurvenverlauf in gewisser Weise kaskadenförmig immer weiter nach oben gerichtet ist.

Das Diagramm zeigt die Abweichungen der Phasen PL1 und PL2 der Drehbewegung der Abreißwalzen 4 und 5 über der Zeit t, wobei die Phasenlage PL1 den zeitlichen Phasenverlauf der vorderen Abreißwalze 4 beschreibt und die Phasenlage PL2 beschreibt den zeitlichen Verlauf der hinteren Abreißwalze 5.

Nach Durchlauf des unteren Umkehrpunktes U ist erkennbar, dass die Phasenlage PL1 und PL2 der vorderen und hinteren Abreißwalz 4 und 5 voneinander abweichen, wodurch eine erhebliche Energieeinsparung erzielt werden kann.

Die Differenz zwischen den Phasenlagen PL1 und PL2 kann dabei durch die Steuereinheit 11 bewirkt werden, sodass bei erforderlicher größerer Reduktion des Energiebedarfes beim Betrieb der Abreißwalzen 4 und 5 die Differenz zwischen den Phasenlagen PL1 und PL2 vergrößert werden kann, und die Differenz kann wieder verkleinert werden, wenn ein nur geringerer Energieeinsparbedarf besteht.

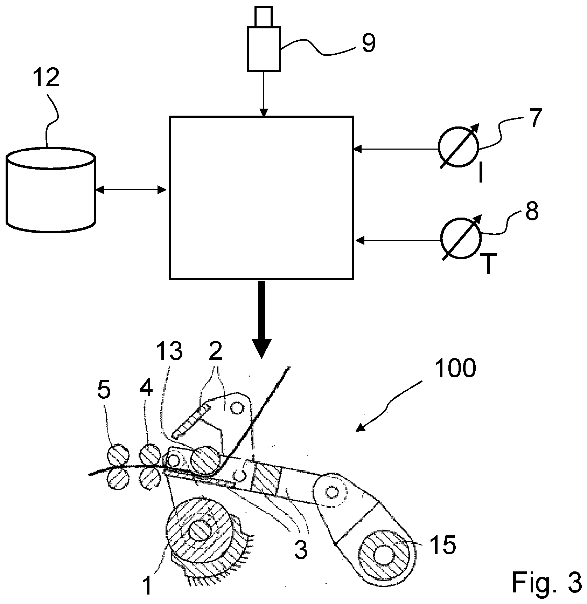

Figur 3 zeigt schließlich die Steuereinheit 11 in Verbindung mit der Speichereinheit 12, wobei ferner die Wirkverbindungen der Steuereinheit 11 zur Motorleistungsaufnahmemesseinheit 7 und zur Motortemperaturmesseinheit 8 sowie zur Kontrolleinrichtung 9 gezeigt sind.

Schematisch ist dabei auch die Wirkverbindung der Steuereinheit 11 mit dem Kämmkopf 100 gezeigt, insbesondere, um den Betrieb der vorderen Abreißwalze 4, der hinteren Abreißwalze 5 sowie der Rundkammwalze 1 und/oder des Speisezylinders 13 zu steuern. Ferner kann die Zangenwelle 15 in ihrer Oszillationsbewegung gesteuert werden, sodass damit die Oberzange 2 und die Unterzange 3 von der Steuereinheit 11 ebenfalls gesteuert werden.

Die Ansteuerung des Kämmkopfes 100 mittels der Steuereinheit 11 insbesondere betreffend die vorstehend aufgeführten Komponenten erfolgt erfindungsgemäß programmabhängig, wobei verschiedenen Programmen auch verschiedene Steuerparameter zugrunde liegen. Die Programme, beispielhaft aufgeführt als Programm P1 bis P4, sind dabei in der Speichereinheit 12 mit entsprechenden Parametersätzen hinterlegt und können auf eine Aktion eines Bedieners folgend in die Steuereinheit 11 geladen werden.

### Bezugszeichen

- 100: Kämmkopf

- 1: Rundkammwalze
- 2: Oberzange
- 3: Unterzange
- 4: vordere Abreißwalze
- 5: hintere Abreißwalze
- 6: Antriebsmotor
- 7: Motorleistungsaufnahmemesseinheit
- 8: Motortemperaturmesseinheit
- 9: Kontrolleinrichtung
- 10: Faserstrang
- 11: Steuereinheit
- 12: Speichereinheit
- 13: Speisezylinder
- 14: Zangenarm
- 15: Zangenwelle
- 16: Rundkammsegment
- 17: Faserwickel
- 18: Wickelwalze
- 19: Abzugswalzenpaar
- 20: Anlenkpunkt
- 21: motorischer Antrieb
- 22: motorischer Antrieb

- α: Rotationswinkel
- t: Zeit
- P1 bis P4: Programme
- PL1: Phasenlage der vorderen Abreißwalze
- PL2: Phasenlage der hinteren Abreißwalze
- U: Umkehrpunkt

## Patentansprüche

1. Verfahren zum Betrieb einer Kämmmaschine für die Spinnereivorbereitung, aufweisend wenigstens einen Kämmkopf (100) mit einer rotierend angetriebenen Rundkammwalze (1), über die in periodischer Abfolge ein Faserstrang (10) zum Auskämmen desselben geführt wird, mit einer Oberzange (2) und einer Unterzange (3), zwischen denen der auszukämmende Faserstrang (10) in periodischer Abfolge festgeklemmt und wieder freigegeben wird, und mit einer rotierend angetriebenen vorderen Abreißwalze (4) und einer rotierend angetriebenen hinteren Abreißwalze (5), wobei mit der vorderen Abreißwalze (4) der Faserstrang (10) in periodischer Abfolge getrennt wird, indem die Ober- und Unterzange (2, 3) relativ zu den Abreißwalzen (4, 5) vor- und zurück bewegt werden und die Abreißwalzen (4, 5) eine Pilgerschrittbewegung ausführen, wobei die Rotationsbewegungen der Abreißwalzen (4, 5) mittels einer Steuereinheit (11) zueinander synchronisiert gesteuert werden,
**dadurch gekennzeichnet, dass** die Steuereinheit (11) die vordere Abreißwalze (4) und/oder die hintere Abreißwalze (5) in Abhängigkeit von durch einen Bediener vorwählbaren Programmen (P1, P2, P3) ansteuert, wobei die vorwählbaren Programme (P1, P2, P3) wenigstens umfassen:
- ein erstes Programm (P1), gemäß dem eine maximale Ausbringungsmenge an ausgekämmtem Faserstrang (10) erzeugt wird und/oder
- ein zweites Programm (P2), gemäß dem eine maximale Qualität des ausgekämmten Faserstrangs (10) erzeugt wird und/oder
- ein drittes Programm (P3), gemäß dem eine minimale Energie pro Menge an ausgekämmtem Faserstrang (10) benötigt wird.

2. Verfahren nach Anspruch 1, **dadurch gekennzeichnet, dass** die vorwählbaren Programme wenigstens ein viertes Programm (P4) umfassen, gemäß dem ein reduzierter bzw. ein minimaler Kämmlingsprozentsatz erzeugt wird, der bestimmt ist durch den Kämmlingsanteil des ausgekämmten Faserstranges.

3. Verfahren nach Anspruch 1, **dadurch gekennzeichnet, dass** die Steuereinheit (11) ausgebildet ist, die Bewegungen der Ober- und Unterzange (2, 3) in Abhängigkeit der Rotationsbewegung der vorderen Abreißwalze (4) anzusteuern.

4. Verfahren nach Anspruch 1 oder 2, **dadurch gekennzeichnet, dass** die Steuereinheit (11) eine Eingabe- Ausgabeeinheit aufweist, insbesondere einen berührungssensitiven Bildschirm, wobei durch die Steuereinheit (11) eine Kammspielzahl abgefragt wird, die der Bediener mittels der Eingabe- Ausgabeeinheit eingeben und an die Steuereinheit (11) mitteilen kann.

5. Verfahren nach einem der Ansprüche 1 bis 4, **dadurch gekennzeichnet, dass** eine Speichereinheit (12) eingerichtet und mit der Steuereinheit (11) verbunden oder baueinheitlich mit dieser ausgebildet ist, wobei Steuerparametersätze zur Steuerung der Funktionen des Kämmkopfes (100) in der Speichereinheit (12) abgelegt und von der Steuereinheit (11) in Abhängigkeit des gewählten Programmes (P1, P2, P3, P4) abgerufen werden.

6. Verfahren nach einem der vorgenannten Ansprüche, **dadurch gekennzeichnet, dass** die Kämmmaschine einen Antriebsmotor (6) aufweist, wobei eine Motorleistungsaufnahmemesseinheit (7) und/oder eine Motortemperaturmesseinheit (8) in Verbindung des Antriebsmotors (6) eingerichtet sind, die an die Steuereinheit (11) eine Motorleistungsaufnahme und/oder eine Motortemperatur übermitteln.

7. Verfahren nach einem der vorgenannten Ansprüche, **dadurch gekennzeichnet, dass** die Steuereinheit (11) die Drehungen der Abreißwalzen (4, 5) in Abhängigkeit des gewählten Programmes (P1, P2, P3, P4) so ansteuert, dass die hintere Abreißwalze (5) mit einer Phasenlage (P2) einer Phasenlage (P1) der vorderen Abreißwalze (4) vor- oder nachläuft und/oder wobei die Phasenlagen (P1, P2) beider Abreißwalzen (4, 5) im Bereich eines oberen Umkehrpunktes (U1) und/oder eines unteren Umkehrpunktes (U2) zueinander gleich sind.

8. Verfahren nach Anspruch 7, **dadurch gekennzeichnet, dass** bei höherem sensierten Motorstrom und/oder bei einer höheren sensierten Motortemperatur die Abweichung zwischen der Phasenlage (PL1) der vorderen Abreißwalze (4) und der Phasenlage (PL2) der hinteren Abreißwalze (5) vergrößert wird und/oder die Kammspielzahl verringert wird.

9. Verfahren nach einem der vorgenannten Ansprüche, **dadurch gekennzeichnet, dass** die Bewegungen der vorderen und hinteren Abreißwalze (4, 5) einer sich ändernden Kammspielzahl angepasst wird, insbesondere während die Kämmmaschine angefahren und die Kammspielzahl auf eine voreingestellte Kammspielzahl hochgefahren oder vorübergehend heruntergefahren wird.

10. Verfahren nach einem der vorgenannten Ansprüche, **dadurch gekennzeichnet, dass** eine Kontrolleinrichtung (9) vorgesehen ist, mit der die Qualität des ausgekämmten Faserstranges (10) erfassbar ist, wobei die Steuereinheit (11) insbesondere basierend auf dem vorgewählten Programm (P1, P2, P3) die Steuerparametersätze zur Steuerung der Funktionen des Kämmkopfes (100) auswählt und/oder anpasst.

11. Verfahren nach einem der vorgenannten Ansprüche, **dadurch gekennzeichnet, dass** die hintere Abreißwalze (5) mit einer maximalen Rotationsbeschleunigung zwischen den aufeinander folgenden unteren Umkehrpunkten (U2) betrieben wird, die kleiner ist als die maximale Rotationsbeschleunigung der vorderen Abreißwalze (4) zwischen den aufeinander folgenden unteren Umkehrpunkten (U2), wenn das dritte Programm (P3) gewählt wird, gemäß dem eine minimale Energie pro Menge an ausgekämmtem Faserstrang (10) benötigt wird.

12. Verfahren nach einem der vorgenannten Ansprüche, **dadurch gekennzeichnet, dass** die vordere Abreißwalze (4) und die hintere Abreißwalze (5) mit einem jeweils den Abreißwalzen (4, 5) zugeordneten motorischen Antrieb (21, 22) separat angetrieben werden.

13. Verfahren nach einem der vorgenannten Ansprüche, **dadurch gekennzeichnet, dass** die Phasenlage (P2) der hinteren Abreißwalze (5) derart von der Phasenlage (P1) der vorderen Abreißwalze (4) abweicht, dass der Abschnitt des Faserstranges (10) zwischen den Abreißwalzen (4, 5) eine in periodischer Abfolge wiederkehrende Schlaufe bildet.

14. Kämmmaschine für die Spinnereivorbereitung mit einer Steuereinheit (11), mit der die Kämmmaschine betreibbar ist gemäß einem Verfahren nach einem der vorgenannten Ansprüche,
- wobei die Steuereinheit (11) die Drehungen der Abreißwalzen (4, 5) in Abhängigkeit des gewählten Programmes (P1, P2, P3, P4) so ansteuert, dass die hintere Abreißwalze (5) mit einer Phasenlage (P2) einer Phasenlage (P1) der vorderen Abreißwalze (4) vor- oder nachläuft und/oder wobei die Phasenlagen (P1, P2) beider Abreißwalzen (4, 5) im Bereich eines oberen Umkehrpunktes (U1) und/oder eines unteren Umkehrpunktes (U2) zueinander gleich sind, und/oder
- wobei eine Kontrolleinrichtung (9) vorgesehen ist, mit der die Qualität des ausgekämmten Faserstranges (10) erfassbar ist, wobei die Steuereinheit (11) insbesondere basierend auf dem vorgewählten Programm (P1, P2, P3) die Steuerparametersätze zur Steuerung der Funktionen des Kämmkopfes (100) auswählt und/oder anpasst, und/oder
- wobei die hintere Abreißwalze (5) mit einer maximalen Rotationsbeschleunigung zwischen den aufeinander folgenden unteren Umkehrpunkten (U2) betrieben wird, die kleiner ist als die maximale Rotationsbeschleunigung der vorderen Abreißwalze (4) zwischen den aufeinander folgenden unteren Umkehrpunkten (U2), wenn das dritte Programm (P3) gewählt wird, gemäß dem eine minimale Energie pro Menge an ausgekämmtem Faserstrang (10) benötigt wird.

15. Kämmmaschine nach Anspruch 14, **dadurch gekennzeichnet, dass** eine Speichereinheit (12) eingerichtet und mit der Steuereinheit (11) verbunden oder baueinheitlich mit dieser ausgebildet ist, wobei Steuerparametersätze zur Steuerung der Funktionen des Kämmkopfes (100) in der Speichereinheit (12) ablegbar und von der Steuereinheit (11) in Abhängigkeit des gewählten Programmes (P1, P2, P3, P4) abrufbar sind.

## Claims

1. Method for operating a combing machine for spinning preparation, comprising a minimum of one combing head (100) having a rotationally driven circular combing cylinder (1) through which a fibre strand (10) is guided in a periodic sequence in order to comb it out, said circular combing cylinder having an upper nipper (2) and a lower nipper (3) in between which the fibre strand (10) to be combed out is clamped in a periodic sequence and then released again, and having a rotationally driven front detaching roller (4) and a rotationally driven rear detaching roller (5), wherein the fibre strand (10) is severed by the front detaching roller (4) in a periodic sequence, in that the upper and lower nippers (2, 3) are moved forwards and backwards relative to the detaching rollers (4, 5) and the detaching rollers (4, 5) perform a pilgrim-step movement, wherein the rotational movements of the detaching rollers (4, 5) are controlled by a control unit (11) such that they are synchronised
**characterised in that** the control unit (11) actuates the front detaching roller (4) and/or the rear detaching roller (5) according to programs (P1, P2, P3) that can be preselected by an operator, wherein the preselectable programs (P1, P2, P3) comprise, as a minimum:
- a first program (P1), in accordance with which a maximum output quantity of combed-out fibre strand (10) is produced and/or
- a second program (P2), in accordance with which a maximum quality of the combed-out fibre strand (10) is produced and/or
- a third program (P3), in accordance with which a minimum amount of energy per quantity of combed-out fibre strand (10) is required.

2. Method according to claim 1, **characterised in that** the preselectable programs comprise at least a fourth program (P4), in accordance with which a reduced or a minimum noil percentage is produced, as determined by the noil content of the combed-out fibre strand.

3. Method according to claim 1, **characterised in that** the control unit (11) is configured to actuate the movements of the upper and lower nippers (2, 3) according to the rotational movement of the front detaching roller (4).

4. Method according to claim 1 or 2, **characterised in that** the control unit (11) comprises an input and output unit, in particular a touch-sensitive screen, wherein a number of comb plays is requested by the control unit (11) and said number can be entered by the operator using the input and output unit and passed on to the control unit (11).

5. Method according to one of the claims 1 to 4, **characterised in that** a memory unit (12) is set up and connected to the control unit (11) or is configured as an inseparable part of the same, wherein control parameter sets for controlling the functions of the combing head (100) are stored in the memory unit (12) and retrieved by the control unit (11) in accordance with the program (P1, P2, P3, P4) selected.

6. Method according to one of the preceding claims, **characterised in that** the combing machine comprises a drive motor (6), wherein a measuring unit for motor power consumption (7) and/or a motor temperature measuring unit (8) are connected to the drive motor (6) and transmit a motor power consumption and/or a motor temperature to the control unit (11).

7. Method according to one of the preceding claims, **characterised in that** the control unit (11) activates the rotations of the detaching rollers (4, 5) in accordance with the selected program (P1, P2, P3, P4) such that the rear detaching roller (5) leads or trails with a phase position (P2) identical to the phase position (P1) of the front detaching roller (4), wherein the phase positions (P1, P2) of both detaching rollers (4, 5) are identical to each other within the area of an upper reversing point (U1) and/or a lower reversing point (U2).

8. Method according to claim 7, **characterised in that,** with an elevated detected motor current and/or an elevated detected motor temperature, the discrepancy between the phase position (PL1) of the front detaching roller (4) and the phase position (PL2) of the rear detaching roller (5) is increased and/or the number of comb plays is reduced.

9. Method according to one of the preceding claims, **characterised in that** the movements of the front and rear detaching rollers (4, 5) are adapted to a changing number of comb plays, in particular while the combing machine is started up and the number of comb plays is increased to a preset number of comb plays or is temporarily reduced.

10. Method according to one of the preceding claims, **characterised in that** a control device (9) is provided by means of which the quality of the combed-out fibre strand (10) can be detected, wherein the control unit (11) selects and/or adjusts the control parameter sets for controlling the functions of the combing head (100), in particular on the basis of the program preselected (P1, P2, P3).

11. Method according to one of the preceding claims **characterised in that** the rear detaching roller (5) is operated at a maximum rotational acceleration between the consecutive lower reversing points (U2) that is less than the maximum rotational acceleration of the front detaching roller (4) between the consecutive lower reversing points (U2), if the third program (P3) is selected, in accordance with which a minimum amount of energy per combed-out fibre strand (10) is required.

12. Method according to one of the preceding claims, **characterised in that** the front detaching roller (4) and the rear detaching roller (5) are driven separately by means of a motorised drive (21, 22) assigned to each of the detaching rollers (4, 5) respectively.

13. Method according to one of the preceding claims, **characterised in that** the phase position (P2) of the rear detaching roller (5) differs from the phase position (P1) of the front detaching roller (4) in such a way that the section of the fibre strand (10) forms a loop that recurs in a periodic sequence in between the detaching rollers (4, 5).

14. Combing machine for spinning preparation comprising a control unit (11), by means of which the combing machine can be operated in accordance with a method according to one of the preceding claims,
- wherein the control unit (11) activates the rotations of the detaching rollers (4, 5) in accordance with the selected program (P1, P2, P3, P4) such that the rear detaching roller (5) leads or trails with a phase position (P2) identical to the phase position (P1) of the front detaching roller (4), and/or wherein the phase positions (P1, P2) of both detaching rollers (4, 5) are identical to each other within the area of an upper reversing point (U1) and/or a lower reversing point (U2), and/or
- wherein a control device (9) is provided by means of which the quality of the combed-out fibre strand (10) can be detected, wherein the control unit (11) selects and/or adjusts the control parameter sets for controlling the functions of the combing head (100), in particular on the basis of the preselected program (P1, P2, P3), and/or
- wherein, between the consecutive lower reversing points (U2), the rear detaching roller (5) is operated at a maximum rotational acceleration that is less than the maximum rotational acceleration of the front detaching roller (4) between the consecutive lower reversing points (U2), if the third program (P3) is selected, in accordance with which a minimum amount of energy per quantity of combed-out fibre strand (10) is required.

15. Combing machine according to claim 14, **characterised in that** a memory unit (12) is set up and connected to the control unit (11) or is configured as an inseparable part of the same, wherein control parameter sets for controlling the functions of the combing head (100) can be stored in the memory unit (12) and retrieved by the control unit (11) in accordance with the program (P1, P2, P3, P4) selected.

## Revendications

1. Procédé d'exploitation d'une peigneuse pour la préparation de filature, comportant au moins une tête de peignage (100) avec un cylindre de peigne rond (1) à entraînement rotatif, sur lequel un faisceau de fibres (10) est guidé à intervalles réguliers pour être peigné, avec une pince supérieure (2) et une pince inférieure (3), entre lesquelles le faisceau de fibres (10) à peigner est serré et à nouveau relâché à intervalles réguliers, et avec un rouleau arracheur avant (4) à entraînement rotatif et un rouleau arracheur arrière (5) à entraînement rotatif, dans lequel le faisceau de fibres (10) est séparé à intervalles réguliers au moyen du rouleau arracheur avant (4) en déplaçant la pince supérieure et inférieure (2, 3) en avant et en arrière par rapport aux rouleaux arracheurs (4, 5) et les rouleaux arracheurs (4, 5) exécutant un mouvement à pas de pèlerin, dans lequel les mouvements de rotation des rouleaux arracheurs (4, 5) sont pilotés de manière synchronisée les uns par rapport aux autres au moyen d'une unité de commande (11), **caractérisé en ce que** l'unité de commande (11) pilote le rouleau arracheur avant (4) et/ou le rouleau arracheur arrière (5) en fonction de programmes (P1, P2, P3) présélectionnables par un opérateur, dans lequel les programmes (P1, P2, P3) présélectionnables comportent au moins :
- un premier programme (P1) selon lequel une quantité de sortie maximale de faisceau de fibres (10) peigné est produite et/ou
- un second programme (P2) selon lequel une qualité maximale du faisceau de fibres (10) peigné est produite et/ou
- un troisième programme (P3) selon lequel une énergie minimale par quantité de faisceau de fibres (10) peigné est nécessaire.

2. Procédé selon la revendication 1, **caractérisé en ce que** les programmes présélectionnables comportent au moins un quatrième programme (P4) selon lequel un pourcentage de blousses réduit ou minimal est produit, qui est déterminé par le taux de blousses dans le faisceau de fibres peigné.

3. Procédé selon la revendication 1, **caractérisé en ce que** l'unité de commande (11) est conçue pour piloter les mouvements de la pince supérieure et inférieure (2, 3) en fonction du mouvement de rotation du rouleau arracheur avant (4).

4. Procédé selon la revendication 1 ou 2, **caractérisé en ce que** l'unité de commande (11) présente une unité d'entrée/sortie, notamment un écran tactile, dans lequel l'unité de commande (11) demande une vitesse de peignage que l'opérateur peut saisir au moyen de l'unité d'entrée/sortie et transmettre à l'unité de commande (11).

5. Procédé selon l'une des revendications 1 à 4, **caractérisé en ce qu'une** unité de stockage (12) est paramétrée et connectée à l'unité de commande (11) ou conçue de manière uniforme avec celle-ci, dans lequel des jeux de paramètres de commande pour piloter les fonctions de la tête de peignage (100) sont enregistrés dans l'unité de stockage (12) et appelés par l'unité de commande (11) en fonction du programme (P1, P2, P3, P4) sélectionné.

6. Procédé selon l'une des revendications précédentes, **caractérisé en ce que** la peigneuse présente un moteur d'entraînement (6), dans lequel un dispositif de mesure de la puissance absorbée par le moteur (7) et/ou un dispositif de mesure de la température du moteur (8) sont mis en place en liaison avec le moteur d'entraînement (6) et transmettent une puissance absorbée par le moteur et/ou une température du moteur à l'unité de commande (11).

7. Procédé selon l'une des revendications précédentes, **caractérisé en ce que** l'unité de commande (11) pilote les rotations des rouleaux arracheurs (4, 5) en fonction du programme (P1, P2, P3, P4) sélectionné de manière à ce que le rouleau arracheur arrière (5) avec une position de phase (P2) précède ou suit une position de phase (P1) du rouleau arracheur avant (4) et/ou dans lequel les positions de phase (P1, P2) des deux rouleaux arracheurs (4, 5) dans la zone d'un point d'inversement supérieur (U1) et/ou d'un point d'inversement inférieur (U2) sont égales l'une à l'autre.

8. Procédé selon la revendication 7, **caractérisé en ce que,** en cas de courant moteur détecté plus élevé et/ou de température moteur détectée plus élevée, la variation entre la position de phase (PL1) du rouleau arracheur avant (4) et la position de phase (PL2) du rouleau arracheur arrière (5) est augmentée et/ou la vitesse de peignage est réduite.

9. Procédé selon l'une des revendications précédentes, **caractérisé en ce que** les mouvements du rouleau arracheur avant et arrière (4, 5) sont adaptés à une vitesse de peignage changeante, notamment pendant le démarrage de la peigneuse et l'augmentation ou la baisse temporaire de la vitesse de peignage à une vitesse de peignage préréglée.

10. Procédé selon l'une des revendications précédentes, **caractérisé en ce qu'un** dispositif de contrôle (9) est prévu qui permet de détecter la qualité du faisceau de fibres (10) peigné, dans lequel l'unité de commande (11) notamment sur la base du programme présélectionné (P1, P2, P3) sélectionne et/ou adapte les jeux de paramètres de commande pour piloter les fonctions de la tête de peignage (100).

11. Procédé selon l'une des revendications précédentes, **caractérisé en ce que** le rouleau arracheur arrière (5) est exploité avec une accélération de rotation maximale entre les points d'inversement inférieurs (U2) consécutifs, qui est inférieure à l'accélération de rotation maximale du rouleau arracheur avant (4) entre les points d'inversement inférieurs (U2) consécutifs lorsque le troisième programme (P3) est sélectionné, selon lequel une énergie minimale par quantité de faisceau de fibres (10) peigné est nécessaire.

12. Procédé selon l'une des revendications précédentes, **caractérisé en ce que** le rouleau arracheur avant (4) et le rouleau arracheur arrière (5) sont entraînés séparément avec un entraînement motorisé (21, 22) affecté à chacun des rouleaux arracheurs (4, 5).

13. Procédé selon l'une des revendications précédentes, **caractérisé en ce que** la position de phase (P2) du rouleau arracheur arrière (5) diffère tellement de la position de phase (P1) du rouleau arracheur avant (4) que la section du faisceau de fibres (10) entre les rouleaux arracheurs (4, 5) forme une boucle revenant à intervalles réguliers.

14. Peigneuse pour la préparation de filature avec une unité de commande (11) permettant d'exploiter la peigneuse selon un procédé selon l'une des revendications précédentes,
- dans laquelle l'unité de commande (11) pilote les rotations des rouleaux arracheurs (4, 5) en fonction du programme (P1, P2, P3, P4) sélectionné de manière à ce que le rouleau arracheur arrière (5) avec une position de phase (P2) précède ou suit une position de phase (P1) du rouleau arracheur avant (4) et/ou dans laquelle les positions de phase (P1, P2) des deux rouleaux arracheurs (4, 5) dans la zone d'un point d'inversement supérieur (U1) et/ou d'un point d'inversement inférieur (U2) sont égales l'une à l'autre, et/ou
- dans laquelle un dispositif de contrôle (9) est prévu qui permet de détecter la qualité du faisceau de fibres (10) peigné, dans laquelle l'unité de commande (11) notamment sur la base du programme présélectionné (P1, P2, P3) sélectionne et/ou adapte les jeux de paramètres de commande pour piloter les fonctions de la tête de peignage (100), et/ou
- dans laquelle le rouleau arracheur arrière (5) est exploité avec une accélération de rotation maximale entre les points d'inversement inférieurs (U2) consécutifs, qui est inférieure à l'accélération de rotation maximale du rouleau arracheur avant (4) entre les points d'inversement inférieurs (U2) consécutifs lorsque le troisième programme (P3) est sélectionné, selon lequel une énergie minimale par quantité de faisceau de fibres (10) peigné est nécessaire.

15. Peigneuse selon la revendication 14, **caractérisée en ce qu'**une unité de stockage (12) est paramétrée et connectée à l'unité de commande (11) ou conçue de manière uniforme avec celle-ci, dans laquelle des jeux de paramètres de commande pour piloter les fonctions de la tête de peignage (100) sont enregistrés dans l'unité de stockage (12) et appelés par l'unité de commande (11) en fonction du programme (P1, P2, P3, P4) sélectionné.
